# EUROPÄISCHE PATENTSCHRIFT

(11) **EP 2 775 884 B1**
(45) Veröffentlichungstag und Bekanntmachung des Hinweises auf die Patenterteilung: **15.07.2015**
(21) Anmeldenummer: 12786916.2
(22) Anmeldetag: 06.11.2012
(51) Int. Cl.: F16H 25/20, H02K 7/06

(54) **ELEKTROMOTORISCHER LINEARANTRIEB, INSBESONDERE ZUM VERSTELLEN VON LIEGE- UND SITZMÖBELN**
ELECTRIC LINEAR DRIVE, IN PARTICULAR FOR ADJUSTING FURNITURE USED FOR SITTING OR LYING DOWN
ACTIONNEUR LINÉAIRE À MOTEUR ÉLECTRIQUE, EN PARTICULIER POUR LE RÉGLAGE D'ÉLÉMENTS DE MEUBLES POUR LITERIE OU POUR SIÈGES

(30) Priorität: 09.11.2011 DE 202011110086 U; 09.11.2011 DE 102011122854; 19.10.2012 DE 102012219113
(43) Veröffentlichungstag der Anmeldung: 17.09.2014
(73) Patentinhaber: Dewertokin GmbH, 32278 Kirchlengern (DE)
(72) Erfinder: OBERNDÖRFER, Andreas, 33739 Bielefeld (DE)
(74) Vertreter: Lippert, Stachow & Partner
(86) Internationale Anmeldenummer: PCT/EP2012/071897
(87) Internationale Veröffentlichungsnummer: WO 2013/068329

(56) Entgegenhaltungen:
- WO-A2-2012/143383
- CH-A5- 692 805
- DE-A1- 19 950 689
- TW-U- M 400 533
- US-A1- 2006 081 079
- US-A1- 2009 133 519
- US-A1- 2010 139 427
- US-A1- 2011 043 062

## Beschreibung

Die Erfindung betrifft einen elektromotorischen Linearantrieb, insbesondere zum Verstellen von beweglich gelagerten Teilen von Liege- und Sitzmöbeln, mit einem Antriebsmotor, einer Gewindespindel, einem zwischen dem Antriebsmotor und der Gewindespindel angeordneten Drehzahlreduziergetriebe, dessen Antriebsrad fest mit der Gewindespindel verbunden ist, einer auf der Gewindespindel sitzenden Spindelmutter, die wahlweise in Drehrichtung arretierbar und in Abhängigkeit von der Drehrichtung der Gewindespindel in Axialrichtung der Gewindespindel verfahrbar ist, sowie einem durch die Axialbewegung der Spindelmutter antreibbaren Hubelement zum Verstellen der beweglichen Möbelteile, wobei die Spindelmutter derart mit dem unverdrehbar geführten Hubelement kuppelbar ist, dass sie wahlweise unverdrehbar mit diesem verbindbar oder von diesem lösbar ist und zwischen dem Hubelement und der Spindelmutter eine Schlingfeder als Kupplung vorgesehen ist.

Ein solcher elektromotorischer Linearantrieb kann sowohl als Einzelantrieb als auch als Doppelantrieb verwendet werden.

Aus der EP 0 968 675 B1 ist bereits ein Einzel- oder Doppelantrieb bekannt, der insbesondere für Möbel des Krankenhaus- und/oder des Pflegebereichs vorgesehen ist. Bei diesem bekannten Linearantrieb ist als Drehzahlreduziergetriebe eine auf einer Motorwelle sitzende Schnecke vorgesehen, die mit einem Schneckenrad im Eingriff steht. Das Schneckenrad ist drehbar auf einem fest auf der Gewindespindel angeordneten Führungskörper gelagert, auf dem ein Kupplungsrad drehfest, jedoch axial verschiebbar geführt ist. Wenn das Kupplungsrad mit dem Schneckenrad gekuppelt ist, wird die Gewindespindel angetrieben, während im entkuppelten Zustand die Gewindespindel stillsteht. Auf der Gewindespindel ist eine mit einem Hubelement in Verbindung stehende Spindelmutter drehfest angeordnet, die sich in Abhängigkeit von der Drehrichtung der Gewindespindel in axialer Richtung verschiebt und das zur Betätigung der beweglichen Möbelteile dienende Hubelement antreibt. Ein solcher Antriebsmechanismus hat sich zwar in der Praxis bereits bewährt, jedoch ist ein solcher Mechanismus relativ aufwendig und nicht beliebig belastbar.

Ferner ist aus der US 2006/0081079 A1 ein Linearantrieb bekannt, bei dem ein drehbarer Handbetätigungsgriff unmittelbar hinter dem Anschluss an das Hubelement vorgesehen ist, mit dem eine Schlingfederkupplung betätigt werden kann. Damit kann zwar im Notfall oder bei Stromunterbrechung eine Absenkung des entsprechenden Möbelteils vorgenommen werden, jedoch ist die Handhabung äußerst unbequem und schwierig. Wenn ein solcher Linearantrieb unterhalb eines Krankenbettes angeordnet ist, müsste die Bedienungsperson den Handgriff unterhalb des Bettes betätigen, um die Schlingfederkupplung zu lösen. Dabei müsste die Bedienungsperson noch darauf achten, den Handgriff in die richtige Richtung zu drehen, denn der Mechanismus spricht nur in einer Drehrichtung an.

Der Erfindung liegt daher die Aufgabe zugrunde, einen Linearantrieb zu schaffen, der nicht nur einfach im Aufbau ist, sich leicht montieren und bedienen lässt und eine robuste Lagerung der Antriebsteile gewährleistet, sondern bei dem der Mechanismus zum Absenken des entsprechenden Möbelteils im Notfall und bei Stromunterbrechung schnell, bequem und zuverlässig ausgelöst werden kann.

Erfindungsgemäß wird diese Aufgabe dadurch gelöst, dass die Spindelmutter (6) einen zylindrischen Außenumfang aufweist, auf dem die Schliengfeder (16) angeordnet ist, und dass auf dem Außenumfang der Spindelmutter ein drehbar, aber axial nicht verschiebbar angeordneter Betätigungsring vorgesehen ist, der einerseits mit dem dem Hubelement abgewandten Ende der Schlingfeder verbunden ist und andererseits ein Betätigungselement zum Drehen des Betätigungsrings in Öffnungsrichtung der Schlingfeder aufweist, und dass parallel zur Gewindespindel entlang des Verschiebungswegs der Spindelmutter eine Betätigungsleiste angeordnet ist, mit der das Betätigungselement in tangentialer Richtung bewegbar ist, um den Betätigungsring zu drehen und dadurch die Schlingfeder zu öffnen.

Gemäß der Erfindung ist die Auslösung des Betätigungsmechanismus für die Absenkung im Notfall und bei Stromausfall mittels der Betätigungsleiste unkompliziert und schnell ausführbar.

Das Betätigungselement des Betätigungsrings kann als radial vorstehende Nase ausgebildet sein, an der die Betätigungsleiste anliegt.

Die Betätigungsleiste ist zweckmäßig mit mehreren in Axialrichtung versetzt angeordneten Schrägflächen versehen, die mit entsprechenden, am Gehäuse ausgebildeten Gegenflächen zusammenwirken.

Die Betätigungsleiste kann von Hand über einen Hebel oder auch über eine Fernbedienung bewegbar sein. Als Fernbedienung dient zweckmäßig ein Bowdenzug.

Bei der erfindungsgemäßen Konstruktion ist die Spindelmutter zweckmäßig drehbar aber in Axialrichtung relativ zu dem Hubelement fixiert in diesem gelagert, sodass es ausschließlich einer einfachen Kupplung bedarf, um die Spindelmutter unverdrehbar mit dem Hubelement zu verbinden bzw. von diesem zu lösen. Im Notfall oder bei Stromausfall braucht die Kupplung dann lediglich gelöst zu werden. Da bei dieser Art von Linearantrieben das Gewinde zwischen Spindel und Spindelmutter nicht selbsthemmend ist, bewegen sich die verstellten Möbelteile dann automatisch in ihre abgesenkte Grundstellung zurück.

Das Prinzip der erfindungsgemäßen Konstruktion ist unkompliziert und robust im Aufbau, denn der Antriebsstrang vom Antriebsrad des Drehzahlreduziergetriebes zum Hubelement ist geradlinig durchgehend, sodass auch größere Kräfte problemlos übertragen werden können.

Bei der erfindungsgemäßen Ausführung der Schlingfederkupplung kann das dem Hubelement zugewandte Ende der Schlingfeder mit dem Hubelement verbunden sein, wobei die Schlingfeder in ihrem Normalzustand die Spindelmutter stramm umgibt und diese drehfest mit dem Hubelement verbindet. Alternativ hierzu kann die Schlingfeder im Normalbetriebszustand auch stramm innerhalb einer Buchse angeordnet sein, welche mit dem Hubelement verbunden ist. Durch Betätigung des dem Hubelement abgewandten Endes der Schlingfeder ist die Kupplung lösbar, indem die Schlingfeder etwas aufgeweitet wird. Dadurch besteht dann keine starre Verbindung mehr zwischen der Spindelmutter und dem Hubelement. Im Notfall oder bei Stromausfall kann sich die Spindelmutter dann frei mit der Spindel drehen, sodass sich das Hubelement zurückbewegt und sich das angehobene Möbelteil absenkt.

An dem Hubelement kann ein Axialwälzlager fixiert sein, in welchem der dem Hubelement zugewandte zylindrisch ausgebildete Endzapfen der Spindelmutter gelagert und in Axialrichtung fixiert ist.

Um die Schlingfederkupplung optimal zu gestalten, kann zwischen dem Außenumfang der Spindelmutter und der Schlingfeder eine fest angeordnete Buchse aus einem Material mit hoher Festigkeit und mit guten Reibeigenschaften vorgesehen sein. Gute, günstige und funktionsgerechte Reibeigenschaften sind dadurch gegeben, dass die Schlingfeder im Normalbetriebszustand das Reibmoment sicher überträgt und die Spindelmutter im betätigten und ausgekuppelten Zustand leichtgängig rotieren kann. Durch entsprechende Auswahl des Materials kann somit eine optimal ausgestattete Schlingfederkupplung mit hoher Lebensdauer geschaffen werden.

Die Erfindung ist in der Zeichnung beispielhaft veranschaulicht und im Nachstehenden im Einzelnen anhand der Zeichnung beschrieben. Es zeigen:
- Fig. 1:: in perspektivischer Darstellung einen Doppelantrieb, bei dem der linke Antrieb in Längsrichtung explosiv dargestellt ist,
- Fig. 2:: eine ähnliche perspektivische Darstellung wie Fig. 1, bei dem der linke Antrieb in Querrichtung explosiv dargestellt ist und die eingekuppelte Stellung zeigt,
- Fig. 3:: die gleiche Darstellung wie Fig. 2 im ausgekuppelten Zustand und
- Fig. 4:: einen Ausschnitt aus dem linken Antrieb in vergrößerter Darstellung, bei dem sämtliche Konstruktionsteile im nichtexplosiven Zustand dargestellt sind.

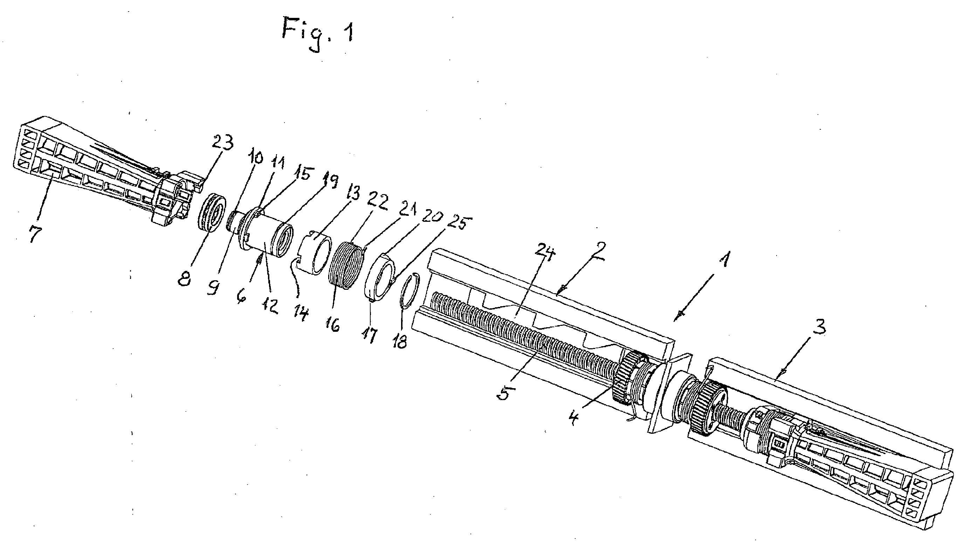

Nach Fig. 1 der Zeichnung besteht der Doppelantrieb 1 aus einem linken Antrieb 2 und einem spiegelbildlich dazu angeordneten rechten Antrieb 3.

Die Einzelteile und die Funktionsweise sind am Beispiel des linken Antriebs 2 erläutert.

Ein in der Zeichnung nicht dargestellter Antriebsmotor treibt über ein Drehzahlreduziergetriebe, von dem nur das Antriebsrad 4 dargestellt ist, eine Gewindespindel 5 an. Das Antriebsrad 4 des Drehzahlreduziergetriebes ist dabei fest mit der Gewindespindel 5 verbunden.

Auf der Gewindespindel 5 sitzt eine Spindelmutter 6, die wahlweise in Drehrichtung arretierbar und in Abhängigkeit von der Drehrichtung der Gewindespindel 5 in Axialrichtung der Gewindespindel 5 verfahrbar ist.

Durch die Axialbewegung der Spindelmutter 6 wird ein Hubelement 7 in Axialrichtung der Gewindespindel 5 verschoben, welches zum Verstellen eines in der Zeichnung nicht dargestellten jeweiligen beweglichen Möbelteils dient.

An dem Hubelement 7 ist auf der der Spindelmutter 6 zugewandten Seite ein Axialkugellager 8 verankert, in welches ein Endzapfen 9 der Spindelmutter 6 formschlüssig eingreift. Der Endzapfen 9 weist an seinem durch das Axialkugellager 8 hindurchgeführten Ende eine Ringnut 10 auf, in die nach dem Einsetzen des Endzapfens 9 in das Axialkugellager 8 ein in der Zeichnung nicht dargestellter Sprengring eingesetzt wird, wodurch die Spindelmutter 6 fest an dem Axialkugellager 8 und dadurch auch mit dem Hubelement 7 verankert wird. Der Endzapfen 9 ist an der Spindelmutter 6 durch einen radial vorspringenden Flansch 11 begrenzt, der im montierten Zustand gegen das Axialkugellager 8 anliegt.

Auf der dem Endzapfen 9 abgewandten Seite des Radialflanschs 11 ist die Spindelmutter 6, die beispielsweise aus Kunststoff besteht, als Zylinder 12 ausgebildet. Auf diesen Zylinder 12 wird eine zylindrische Buchse 13 aufgeschoben, die formschlüssig auf den Zylinder 12 passt. Die Buchse 13 wird dabei soweit auf den Zylinder 12 aufgeschoben, dass sie an dem Radialflansch 11 zur Anlage kommt. In Drehrichtung der Spindelmutter 6 ist die Buchse 13 dadurch gesichert, dass axiale Ausnehmungen 14 der Buchse in entsprechende Vorsprünge 15 der Spindelmutter 6 eingreifen.

Die Buchse 13, die vorzugsweise aus Stahl mit guten Reibeigenschaften besteht, dient zur Aufnahme einer stramm auf dieser sitzenden Schlingfeder 16, die in diesem Zustand als Schlingfederkupplung zwischen der Spindelmutter 6 und dem Hubelement 7 dient.

Nachdem die Buchse 13 und die Schlingfeder 16 auf den Zylinder 12 der Spindelmutter 16 aufgeschoben sind, wird auf das Ende des Zylinders 12 noch ein Betätigungsring 17 aufgeschoben, der mittels eines Sprengrings 18 auf dem Zylinder 12 gesichert wird. Der Sprengring 19 greift dabei in eine kurz vor dem Ende des Zylinders 12 vorgesehene Ringnut 18 ein und hält dadurch die Buchse 13 sowie die stramm auf dieser sitzende Schlingfeder 16 und den Betätigungsring 17 auf dem Zylinder 12 fest.

Der Betätigungsring 17 ist drehbar auf dem Zylinder 12 zwischen der Buchse 13 und dem Sprengring 18 gelagert. An seinem äußeren Umfang ist der Betätigungsring 17 mit einem Vorsprung 20 versehen, an dem das dem Hubelement 7 abgewandte freie Ende 21 der Schlingfeder 16 anliegt, während das gegenüberliegende freie Ende 22 der Schlingfeder 16 an einer Halterung 23 des Hubelements 7 befestigt ist.

In diesem Zustand, bei dem die Schlingfeder 16 fest auf der Buchse 13 aufsitzt und somit die Spindelmutter 6 unverdrehbar mit dem Hubelement 7 kuppelt, bewirkt eine Rotation der Gewindespindel 17 eine Vorwärts- bzw. Rückwärtsbewegung des Hubelements 7.

Ein Lösen der Schlingfederkupplung kann dadurch erfolgen, dass der Betätigungsring 17 bei dem in der Zeichnung dargestellten Ausführungsbeispiel nach rechts im Uhrzeigersinn verdreht wird, wodurch sich die Schlingfeder 16 öffnet, sodass sich folglich die Spindelmutter 6 mit der Gewindespindel 5 dreht und keine Bewegung auf das Hubelement 7 überträgt. Dieser Mechanismus ist insbesondere dann wichtig wenn beispielsweise bei Stromunterbrechung oder im Notfall das entsprechende Möbelteil abgesenkt werden soll.

Bei Stromausfall und feststehender Gewindespindel 5 kann sich die entkuppelte Spindelmutter 6 auf der Gewindespindel 5 frei zurückdrehen, da das Gewinde zwischen Spindelmutter 6 und Gewindespindel 5 nicht hemmend ist.

Zur Drehung des Betätigungsrings 17 in die Entkuppelstellung der Schlingfeder 16 dient eine Betätigungsleiste 24, die parallel zur Gewindespindel 5 entlang des Verschiebungswegs der Spindelmutter 6 angeordnet ist. Die Betätigungsleiste 24 wirkt mit einer an dem Betätigungsring 17 vorgesehenen radial vorspringenden Nase 25 zusammen. Die Betätigungsleiste 24 ist in tangentialer Richtung zu dem Betätigungsring 17 bewegbar und drückt zum Entkuppeln der Schlingfedern 16 die Nase 25 des Betätigungsrings 17 in eine gespannte Stellung, bei der sich die Schlingfeder 16 aufweitet und die Spindelmutter 6 freigibt.

Die Betätigungsleiste 24 ist mit mehreren in Axialrichtung versetzt angeordneten Schrägflächen 26 versehen, die mit entsprechenden am Gehäuse ausgebildeten Gegenflächen 27 zusammenwirken.

Die Betätigungsleiste 24 kann über einen einfachen Handhebel oder eine Fernbedienung, beispielsweise einen Bowdenzug, bewegt werden. Beim Bewegen der Betätigungsleiste 24 gleitet diese an den Gegenflächen 27 des Gehäuses entlang, sodass ihre Bewegung sowohl eine Axialkomponente als auch eine Vertikalkomponente erfährt. Aufgrund der Vertikalkomponente drückt die Betätigungsleiste 24 gegen die Nase 25 des Betätigungsrings 17 und verdreht diesen, sodass die Schlingfeder 16 öffnet und den Entkupplungsvorgang auslöst.

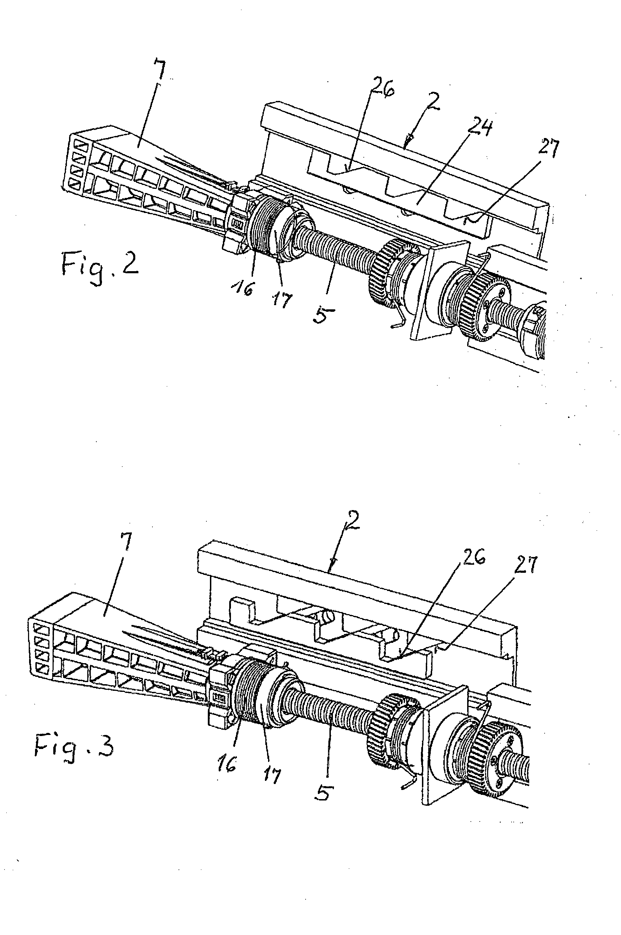

In Fig. 2 und 3 sind in seitlicher Explosionsdarstellung der eingekuppelte und der ausgekuppelte Zustand der Schlingfeder 16 dargestellt.

In Fig. 2, die den eingekuppelten Zustand zeigt, ist zu erkennen, dass die Betätigungsleiste 24 ihre höchste Position einnimmt, bei der die Schlingfeder 16 stramm auf der Spindelmutter 6 bzw. der Buchse 13 sitzt.

In Fig. 3, die den ausgekuppelten Zustand zeigt, ist die Betätigungsleiste 24 ein Stück nach links in der Zeichnung verschoben, wobei die Schrägflächen 26 der Betätigungsleiste 24 an den Gegenflächen 27 des Gehäuses entlanggeglitten sind und die Betätigungsleiste 24 somit ein Stück nach unten versetzt ist, sodass durch Zusammenwirken der Betätigungsleiste 24 mit der Nase 25 des Betätigungsrings 17 die Schlingfeder 16 öffnet, sodass die Spindelmutter 6 von dem Hubelement 7 entkoppelt wird.

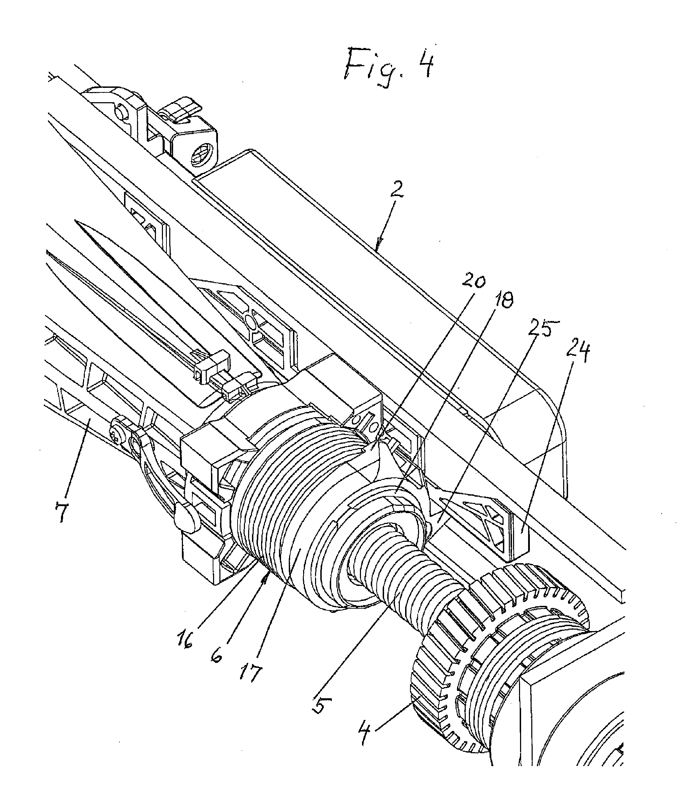

In Fig. 4 sind in vergrößerter Darstellung einige Details besser zu erkennen. Insbesondere ist in dieser Darstellung besonders gut sichtbar, wie die Betätigungsleiste 24 auf die Nase 25 des Betätigungsrings 17 drückt und damit die Schlingfeder 16 öffnet und den Entkupplungsvorgang herbeiführt.

Die Anordnung von Spindelmutter 6 und Hubelement 7 ist in gewissen Grenzen frei wählbar. Bevorzugt ist jedoch, dass die Spindelmutter 6 vollständig in dem Hubelement 7 gelagert und angeordnet ist. Der Vorteil liegt in einer kompakten Bauweise. Alternativ hierzu ist die Spindelmutter 6 teilweise in dem Hubelement 7 angeordnet.

Bei der Anordnung von Spindelmutter 6 und Hubelement 7 ist jedoch wesentlich, dass die Spindelmutter 6 und das Hubelement 7 gemeinsam gelagert sind. Alternativ hierzu kann die Spindelmutter 6 in einem Abstand zum Hubelement 7 angeordnet beziehungsweise gelagert sein.

### Bezugszeichenliste

- 1: Doppelantrieb
- 2: linker Antrieb
- 3: rechter Antrieb
- 4: Antriebsrad
- 5: Gewindespindel
- 6: Spindelmutter
- 7: Hubelement
- 8: Axialkugellager
- 9: Endzapfen
- 10: Ringnut
- 11: Radialflansch
- 12: Zylinder
- 13: Buchse
- 14: Axiale Ausnehmungen
- 15: Vorsprünge
- 16: Schlingfeder
- 17: Betätigungsring
- 18: Sprengring
- 19: Ringnut
- 20: Vorsprung
- 21: freies Ende
- 22: freies Ende
- 23: Halterung
- 24: Betätigungsleiste
- 25: Nase
- 26: Schrägflächen
- 27: Gegenflächen

## Patentansprüche

1. Elektromotorischer Linearantrieb, insbesondere zum Verstellen von beweglich gelagerten Teilen von Liege- und Sitzmöbeln, mit einem Antriebsmotor, einer Gewindespindel (5), einem zwischen dem Antriebsmotor und der Gewindespindel (5) angeordneten Drehzahlreduziergetriebe, dessen Antriebsrad (4) fest mit der Gewindespindel (5) verbunden ist, einer auf der Gewindespindel (5) sitzenden Spindelmutter (6), die wahlweise in Drehrichtung arretierbar und in Abhängigkeit von der Drehrichtung der Gewindespindel (5) in Axialrichtung der Gewindespindel (5) verfahrbar ist, sowie einem durch die Axialbewegung der Spindelmutter (6) antreibbaren Hubelement (7) zum Verstellen der beweglichen Möbelteile, wobei die Spindelmutter (6) derart mit dem unverdrehbar geführten Hubelement (7) kuppelbar ist, dass sie wahlweise unverdrehbar mit diesem verbindbar oder von diesem lösbar ist und zwischen dem Hubelement (7) und der Spindelmutter (6) eine Schlingfeder (16) als Kupplung vorgesehen ist, **dadurch gekennzeichnet, dass** die Spindelmutter (6) einen zylindrischen Außenumfang aufweist, auf dem die Schlingfeder (16) angeordnet ist, und dass auf dem Außenumfang der Spindelmutter (6) ein drehbar, aber axial nicht verschiebbar angeordneter Betätigungsring (17) vorgesehen ist, der einerseits mit dem dem Hubelement (7) abgewandten Ende der Schlingfeder (16) verbunden ist und andererseits ein Betätigungselement zum Drehen des Betätigungsrings (17) in Öffnungsrichtung der Schlingfeder (16) aufweist, und dass parallel zur Gewindespindel (5) entlang des Verschiebungswegs der Spindelmutter (6) eine Betätigungsleiste (24) angeordnet ist, mit der das Betätigungselement in tangentialer Richtung bewegbar ist, um den Betätigungsring (17) zu drehen und dadurch die Schlingfeder (16) zu öffnen.

2. Elektromotorischer Linearantrieb nach Anspruch 1, d a - **durch gekennzeichnet**, dass das Betätigungselement des Betätigungsrings (17) als radial vorstehende Nase (25) ausgebildet ist und dass die Betätigungsleiste (24) an der Nase (25) anliegt.

3. Elektromotorischer Linearantrieb nach Anspruch 2, **dadurch gekennzeichnet, dass** die Betätigungsleiste (24) mit mehreren in Axialrichtung versetzt angeordneten Schrägflächen (26) versehen ist, die mit entsprechenden, am Gehäuse ausgebildeten Gegenflächen (27) zusammenwirken.

4. Elektromotorischer Linearantrieb nach Anspruch 3, **dadurch gekennzeichnet, dass** die Betätigungsleiste (24) über eine Fernbedienung verschiebbar ist.

5. Elektromotorischer Linearantrieb nach Anspruch 4, **dadurch gekennzeichnet, dass** als Fernbedienung ein Bowdenzug vorgesehen ist.

6. Elektromotorischer Linearantrieb nach einem der Ansprüche 1 bis 5, **dadurch gekennzeichnet, dass** die Spindelmutter (6) drehbar, aber in Axialrichtung relativ zu dem Hubelement (7) fixiert in diesem gelagert ist.

7. Elektromotorischer Linearantrieb nach einem der Ansprüche 1 bis 6, **dadurch gekennzeichnet, dass** das dem Hubelement (7) zugewandte Ende der Schlingfeder (16) mit dem Hubelement (7) verbunden ist, dass die Schlingfeder (16) in ihrem Normalzustand die Spindelmutter (6) stramm umgibt und diese drehfest mit dem Hubelement (7) verbindet und dass durch Betätigung und Aufweitung des dem Hubelement (7) abgewandten Endes der Schlingfeder (16) die Kupplung lösbar ist.

8. Elektromotorischer Linearantrieb nach einem der Ansprüche 6 oder 7, **dadurch gekennzeichnet, dass** an dem Hubelement (7) ein Axialwälzlager (8) fixiert ist und dass in dem Axialwälzlager (8) der dem Hubelement (7) zugewandte zylindrisch ausgebildete Endzapfen (9) der Spindelmutter (6) gelagert und in Axialrichtung fixiert ist.

9. Elektromotorischer Linearantrieb nach Anspruch 1, **dadurch gekennzeichnet, dass** zwischen dem Außenumfang der Spindelmutter (6) und der Schlingfeder (16) eine drehfest auf der Spindelmutter (6) angeordnete Buchse (13) aus einem Material mit hoher Festigkeit und mit guten Reibeigenschaften vorgesehen ist.

## Claims

1. An electric motor-actuated linear drive, in particular for adjusting moveably mounted parts of lying and seating furniture, comprising a drive motor, a threaded spindle (5), a speed reduction gear arranged between the drive motor and the threaded spindle (5), the drive wheel (4) of the speed reduction gear being fixedly connected to the threaded spindle (5), a spindle nut (6) which is carried on the threaded spindle (5) and which can be selectively arrested in the direction of rotation and which is displaceable in the axial direction of the threaded spindle (5) in dependence on the direction of rotation of the threaded spindle (5), and a stroke element (7) drivable by the axial movement of the spindle nut (6) for adjusting the moveable furniture parts, wherein the spindle nut (6) can be coupled to the non-rotatably guided stroke element (7) in such a way that it is selectively connectable non-rotatably thereto or is releasable therefrom and wherein a wrap spring (16) being provided as the coupling between the stroke element (7) and the spindle nut (6), **characterised in that** the spindle nut (6) having a cylindrical outside periphery on which the wrap spring (16) is arranged, and that provided on the outside periphery of the spindle nut (6) is a rotatably but axially non-displaceably arranged actuating ring (17) which on the one hand is connected to the end of the wrap spring (16), that is remote from the stroke element (7), and which on the other hand has an actuating element for rotation of the actuating ring (17) in the opening direction of the wrap spring (16), and that parallel to the threaded spindle (5) along the path of displacement of the spindle nut (6) an actuating bar (24) is arranged which can move the actuating element in the tangential direction to rotate the actuating ring (17 and thereby open the wrap spring (16).

2. An electric motor-actuated linear drive as set forth in claim 1 **characterised in that** the actuating element of the actuating ring (17) is in the form of a radially projecting nose (25) and that the actuating bar (24) bears against the nose (25).

3. An electric motor-actuated linear drive as set forth in claim 2 **characterised in that** the actuating bar (24) is provided with a plurality of inclined surfaces (26) arranged displaced in the axial direction and cooperating with corresponding counterpart surfaces (27) on the housing.

4. An electric motor-actuated linear drive as set forth in claim 3 **characterised in that** the actuating bar (24) is displaceable by way of a remote control.

5. An electric motor-actuated linear drive as set forth in claim 4 **characterised in that** a Bowden cable is provided as the remote control.

6. An electric motor-actuated linear drive as set forth in one of the claims 1 to 5 **characterised in that** the spindle nut (6) is mounted in the stroke element (7) rotatably but fixedly in the axial direction relative thereto.

7. An electric motor-actuated linear drive as set forth in one of the claims 1 to 6 **characterised in that** the end of the wrap spring (16), that is towards the stroke element (7), is connected to the stroke element (7), the wrap spring (16) tightly surrounds the spindle nut (6) in the normal condition of the spring and connects the spindle nut non-rotatably to the stroke element (7) and the coupling is releasable by actuation and enlargement of the end of the wrap spring (16), that is remote from the stroke element (7).

8. An electric motor-actuated linear drive as set forth in claim 6 or 7 **characterised in that** an axial rolling bearing (8) is fixed in the stroke element (7) and that the cylindrical end spigot (9) of the spindle nut (6), that is towards the stroke element (7), is mounted in the axial rolling bearing (8) and is fixed in the axial direction.

9. An electric motor-actuated linear drive as set forth in claim 1 **characterised in that** provided between the outside periphery of the spindle nut (6) and the wrap spring (16) is a sleeve (13) which is arranged non-rotatably on the spindle nut (6) and comprises a material of high strength and with good friction properties.

## Revendications

1. Actionneur linéaire à moteur électrique, en particulier pour le réglage d'éléments logés de manière mobile de meubles pour couchage ou assise, comprenant un moteur d'entraînement, une broche filetée (5), un réducteur de vitesse disposé entre le moteur d'entraînement et la broche filetée (5) et dont la roue motrice (4) est solidaire de la broche filetée (5), un écrou de broche (6) étant assis sur la broche filetée (5) et susceptible d'être arrêté au choix dans le sens de rotation et déplacé dans la direction axiale de la broche filetée (5) en fonction du sens de rotation de la broche filetée (5), ainsi qu'un élément de levage (7) apte à être entraîné par le mouvement axiale de l'écrou de broche (6) pour régler les pièces mobiles de meuble, ledit écrou de broche (6) pouvant être accouplé à l'élément de levage (7) guidé de manière pas tournante de sorte qu'il peut au choix être relié avec ou détaché dudit élément de levage et qu'entre l'élément de levage (7) et l'écrou de broche (6) il est prévu un ressort enroulé comme accouplement, ***caractérisé* en ce que** l'écrou de broche (6) présente un périmètre extérieur cylindrique sur lequel est disposé le ressort enroulé (16) et que sur le périmètre extérieur de l'écrou de broche (6) est prévu une bague d'actionnement (17) disposée de manière rotative mais pas mobile axialement, bague qui est reliée d'une part avec l'extrémité du ressort enroulé (16) détournée de l'élément de levage et d'autre part comporte un élément d'actionnement pour tourner la bague d'actionnement dans le sens d'ouverture du ressort enroulé (16) et que parallèlement à la broche filetée (5) le long la course de déplacement de l'écrou de broche (6) est disposé un liston d'actionnement (24) avec lequel peut être mu l'élément d'actionnement dans le sens tangentiel pour tourner la bague d'actionnement (17) et ainsi ouvrir le ressort enroulé (16).

2. Actionneur linéaire à moteur électrique selon la revendication 1, ***caractérisé* en ce que** l'élément d'actionnement de la bague d'actionnement (17) est formé comme un taquet (25) saillant radialement et que le liston d'actionnement (24) repose contre ledit taquet (25).

3. Actionneur linéaire à moteur électrique selon la revendication 2, ***caractérisé* en ce que** le liston d'actionnement (24) est muni de plusieurs surfaces inclinées (26) décalés dans la direction axiale et coopérant avec des contre-surfaces (27) correspondantes formées sur la boîte.

4. Actionneur linéaire à moteur électrique selon la revendication 3, ***caractérisé* en ce que** le liston d'actionnement (24) peut être déplacé par une commande à distance.

5. Actionneur linéaire à moteur électrique selon la revendication 4, ***caractérisé* en ce que** comme une commande à distance il est prévu un cable Bowden.

6. Actionneur linéaire à moteur électrique selon l'une des revendications 1 à 5, ***caractérisé* en ce que** l'écrou de broche (6) est logé dans l'élément de levage (7) de manière rotative par rapport à l'élément de levage (7) mais fixe dans la direction axiale.

7. Actionneur linéaire à moteur électrique selon l'une des revendications 1 à 6, ***caractérisé* en ce que** l'extrémité du ressort enroulé (16) tournée vers l'élément de levage (7) est reliée avec l'élément de levage (7), que le ressort enroulé (16), en son état normal, entoure ledit écrou de broche (6) de manière tendue et le relie avec l'élément de levage (7) de manière fixe en rotation, et que l'accouplement peut être desserré par l'actionnement et l'élargissement de l'extrémité du ressort enroulé (16) détournée de l'élément de levage.

8. Actionneur linéaire à moteur électrique selon l'une des revendications 6 ou 7, ***caractérisé* en ce que** sur l'élément de levage (7) il est fixé un palier à roulement axial (8) et que dans le palier à roulement axial (8) il est logé le tenon d'extrémité cylindrique (9) de l'écrou de broche (6) tourné vers l'élément de levage (7) et fixé dans le sens axial.

9. Actionneur linéaire à moteur électrique selon la revendication 1, ***caractérisé* en ce qu'**entre le périmètre extérieur de l'écrou de broche (6) et le ressort enroulé (16) il est prévue une douille (13) en un matériau à haute stabilité et avec des bonnes propriétés de friction disposée sur l'écrou de broche (6) de manière fixe en rotation.
